# EUROPEAN PATENT APPLICATION

(11) **EP 4 546 378 A1**
(43) Date of publication of application: **30.04.2025**
(21) Application number: 24207478.9
(22) Date of filing: 18.10.2024
(51) Int. Cl.: H01F 5/02, H01F 6/06, H01F 27/36

(54) **MAGNETIC SHIELDING**

(30) Priority: 25.10.2023 GB 202316316; 03.09.2024 GB 202412877
(71) Applicant: Magnetic Shields Limited, Tonbridge Kent TN12 0DS (GB)
(72) Inventor: Bowes, Alexander, Gillingham, ME7 4LR (GB)
(74) Representative: MacLean, Martin David

(57) **Abstract**

A cryostat contains an internal volume for containing an object to be tested at or an apparatus to be operated at a cryogenic temperature, means for reducing the temperature of the internal volume to a cryogenic temperature, and at least one coil winding within the internal volume for generating a magnetic field in the internal volume to cancel the effect of an ambient magnetic field, and passive magnetic shielding located within the internal volume but outside the at least one coil winding.

## Description

### FIELD OF THE INVENTION

The present invention relates to magnetically shielding a defined space. In particular, it relates to a magnetic shield for use in the cryogenically cooled environment of a cryostat.

### BACKGROUND ART

A cryostat is an apparatus for testing a sample or operating a device which is located in a volume which is maintained at a low cryogenic temperature within the cryostat, so that the sample or device is at the low cryogenic temperature. The accuracy of testing may be adversely affected by ambient magnetic fields. Ambient magnetic fields arise from several sources. Environmental magnetic fields include the combined field of the earth's magnetic field, buildings, utility infrastructures, and instrumentation equipment. Physical objects and components are also potential sources of ambient magnetic fields. The earth's magnetic field has a magnetic field strength of between 22 × 10⁻⁶ T and 67 × 10⁻⁶ T; when used herein, the term "ambient magnetic field" means a magnetic field having a strength of less than 100 or 200 × 10⁻⁶ T. In environments in which it is desirable to negate ambient magnetic fields, such as environments in which sensitive measuring and testing procedures take place, some form of apparatus is used to isolate the area, or volume, from external magnetic fields. Such magnetic shields can be passive shields, which utilise high magnetic permeability metal alloys to draw the field into the alloy, redirecting the magnetic field lines around the shielded volume, and leaving the enclosed space inside the shield relatively free of magnetic flux. This method is known as flux shunting. Typically, passive shields are required to fully enclose a shielded volume in order to avoid ingress of stray fields, and are limited by the permeability of the material and its ability to effectively shield the local field strength.

Active shielding can be used as an alternative or in addition to passive shielding in a cryostat. Active shields cancel an ambient magnetic field within a shielded volume by creating an electromagnetic cancellation field substantially opposite to the ambient magnetic field, thus cancelling it. Active magnetic shielding typically requires a current excited through a coil of conductive material such as copper. Lenz's Law of electromagnetism shows that a magnetic field proportional to the current applied is induced at 90° to the plane of the coil. The flux density of the induced magnetic field can be controlled via the current applied through the coil to cancel an equal and opposite magnetic field. Typically, Helmholtz coils or solenoids are used. Alternatively, complex wire patterns and arrangements can be used to fine tune the cancellation requirements within a space.

Advancements in quantum technologies and particle physics research have resulted in a need for magnetic shielding within cryostats, in both laboratory and industry settings. It is common to construct passive shielding using high-permeability materials that are optimised for cryogenic temperatures, to create a shielded volume. However, holes and other large openings are often required in the shielding to allow cabling to be passed through, and to allow access to the shielded space. Such gaps in the passive shield degrade the performance of the shielding, resulting in unwanted magnetic fields within the shielded environment. In some circumstances where a high degree of shielding in the cryostat is required, active shielding is used in addition to the passive shield, to further reduce the residual field inside the shielded enclosure. In cryostats this typically takes the form of electromagnetic conductive coils made of copper or the like arranged around the exterior of the shielded volume, outside the cryostat, in a saddle or Helmholtz formation. It is necessary to place the coils outside the cryostat as the heat generated by the coils will negate the cryogenic environment within. However, placing the active shielding outside the passive shielding means that its performance is sub-optimal as its induced fields will be distorted by the passive shielding material. Furthermore, a high current is required as the induced electromagnetic field is both countered by ambient magnetic fields and also has to penetrate the passive shielding material, increasing power costs and raising high-current safety concerns. With the coils being further away from a small region of interest, it is also harder to exercise precise control over the magnetic field gradients in the region of interest.

### SUMMARY OF THE INVENTION

There is a need for an apparatus that overcomes the problems associated with prior art cryostat active shielding arrangement.

The present invention therefore provides
a cryostat containing a cryogenically-cooled internal volume for containing an object to be tested at or apparatus to be operated at cryogenic temperatures, cooling means for reducing the temperature of the internal volume to the cryogenic temperature, at least one coil winding within the cryogenically-cooled internal volume for generating a magnetic field in the internal volume to cancel the effect of an ambient magnetic field, and passive magnetic shielding located within the cryogenically-cooled internal volume, but outside the at least one coil winding.

Preferably the least one coil winding provides active magnetic shielding to cancel the effect, within the cryogenically-cooled internal volume, of an ambient magnetic field of below 100 × 10⁻⁶ T, and more preferably between about 22 × 10⁻⁶ T and 67 × 10⁻⁶ T

The passive magnetic shielding is ideally located within the internal volume, but located outside the at least one coil winding. This provides an additional degree of magnetic shielding, reducing the background field that is to be countered by the at least one coil winding and thus reducing the current demand.

A current supply can be provided, located outside the internal volume for supplying current to the at least one coil winding, and adapted to control the current so as provide active magnetic shielding of the internal volume. Such control systems are known *per se* from active shielding efforts in other contexts, and can be applied here. Alternatively, the at least one coil can be controlled so as to establish a desired non-zero magnetic field within the internal volume, as required by the context.

The at least one coil winding is preferably mounted on a former of nylon; this will enable the coil winding to retain its desired route or pattern. The former is preferably of PA12 nylon, more preferably PA12 nylon with a glass reinforcement of between 30% and 50% by volume. This provides a non-magnetic, non-conductive former with a thermal expansion coefficient which matches that of an aluminium mounting, bracket, or other form of support closely enough to allow cooling to cryogenic temperatures without structural damage being caused by differential thermal contraction.

We prefer that the wire of at least one of the at least one coil windings is supported on the nylon former in a pattern having arcuate sections, the wire being retained in place by upstanding arcuate ridges located adjacent the arcuate sections, on the inner side of the arc. The upstanding arcuate ridges ideally have an elongate channel for receiving the wire, on the convex side thereof.

There are preferably at least three coil windings, oriented in mutually orthogonal directions. These can be each mounted on one of three nylon formers, the three formers each including a cylindrical portion and being sized so that a second former of the three fits concentrically within the first of the three, and a third former of the three fits concentrically within the second. This provides a compact set of coil windings which can define an area within them that has a closely controlled magnetic field, either actively shielded to a near-zero A suitable superconducting wire is one of the Niobium-Titanium family of alloys.

The present invention also relates to the coil arrangement defined above *per se,* for example as a removable or retrofittable part for a cryostat that can be added when needed.

Compared with active shielding coils outside the cryostat, a system as defined above is significantly less impaired by distortion caused by the passive shielding material. There is likely to be some lesser distortion even when the active shielding coils are inside the passive shield, but to a much lesser extent as the fields do not have to penetrate the passive shield. Also, as the region in which the active shielding coils are operating is shielded, the coils need only deal with much smaller fields and so can be more accurate. The induced magnetic field can be fine-tuned to negate the magnetic field gradients within the shielded volume, or establish a desired background field. Furthermore, delicate field control in x, y and z axes can be achieved.

The coils of the present invention are smaller and therefore cheaper and quicker to manufacture as compared to active coils arranged external to the cryostat.

### BRIEF DESCRIPTION OF THE DRAWINGS

An embodiment of the present invention will now be described by way of example, with reference to the accompanying figures in which;
Figure 1 shows an example of the invention in schematic cross-sectional form;
Figures 2-4 show the three coil formers used in examples of the present invention, figure 2 showing the x coil, figure 3 showing the y coil, and figure 4 showing the z coil;
Figure 5 shows an enlarged part of the x and y coils showing the wire support; and
Figure 6 shows a corresponding enlarged part of the z coil.

### DETAILED DESCRIPTION OF THE EMBODIMENTS

Active magnetic shielding is a well-established principle whereby a current is excited through a coil of conductive material such as copper, and due to Lenz's Law a magnetic field proportional to the current applied is induced at 90° to the plane of the coil. By controlling the current applied through the coil, one controls the flux density of the induced magnetic field and can effectively cancel an equal and opposite magnetic field to which it is applied. Active shielding differs from passive shielding in that passive shielding utilises a high-permeability material to re-direct magnetic field lines through the shielding material, leaving the enclosed space inside the shield relatively free of magnetic flux. This method is known as flux shunting.

Due to recent advancements in quantum technologies and particle physics research, cryogenically cooled environments that require magnetic shielding are becoming much more commonplace in laboratory and industry settings. Material such as Cryophy^{®} (Cryophy is a registered trade mark of Aperam Alloys Imphy, France), a high-permeability material, is often employed to provide passive shielding optimised for cryogenic temperatures (<4 degrees Kelvin). However, holes and other large openings are often required in the shielding design to allow for cable feed-throughs, and for the space inside the shield to be easily accessible. Due to such holes, the shielding performance is often degraded due to flux leakage and unwanted magnetic field gradients can be present within the shielded environment. Active shielding can then be utilised by assembling electromagnetic conductive coils made from materials such as copper around the exterior of the shielded enclosure, to reduce the residual field inside the shielded enclosure even further and account for negative effects of hole and opening placements in the shielding design.

In the existing state-of-the-art technology, the active shielding coils must be assembled outside of the cryostat in a Helmholtz formation, or a saddle formation (CERN, https://indico.cern.ch/event/727555/contributions/3452820/attachments/1868399/3073390/ Active_magnetic_shielding_for_cryomodules.pdf). This is because if the coils were placed inside the cryostat, resistance in the coil during current excitation would radiate thermal energy and raise the temperature of the cryostat, destroying any superconducting behaviour. Having the coils outside of the cryostat creates some limitations:
- The coils have to be large and are therefore costly and time-consuming to manufacture
- A high current is required, as the induced electromagnetic field is not only being countered by the Earth's magnetic field, it also has to penetrate the passive shielding material. This increases power costs and raises high-current safety concerns
- The active shielding performance is sub-optimal, due to distortions in the induced fields created by the passive shielding material
- Active shielding is difficult across all 3 axes (x, y, and z)
- This method does not allow for delicate field control or fine-tuning of the magnetic field inside the shielded enclosure.

We have developed an active magnetic shield that can be placed inside the cryostat thanks to the use of a superconducting conductive coil material, in this case Niobium-Titanium wire, instead of copper that would have previously been used. Using Nb-Ti wire means that when the cryostat is cooled, the active shielding coils also begin superconducting. The electrical resistance of the wire drops to zero and negligible heat is emitted from the coil, enabling the cryostat to continue functioning. The above limitations are thus resolved; the benefits of this system include:
- A lower current is required due to the coils being located inside an already-shielded environment, therefore the magnetic field for which an equal and opposite needs to be provided is smaller. As the required exciting current is proportional to the induced field, the power requirements and safety concerns are significantly reduced. In many applications, the current requirement can be reduced by up to three orders of magnitude, from several Amps to several milli-Amps.
- The coils are physically smaller due to a reduced cross-sectional diameter, reflecting the lower current capacity that is needed. They are therefore cheaper and less time consuming to manufacture.
- The active shielding performance is optimised, as the induced fields do not have to penetrate a passive shielding material.
- Coils that are fitted around the internal circumference of the cylindrical passive shield can enable effective shielding across all 3 axes (x, y, and z).
- The arrangement allows for delicate field and field gradient control inside the shielded enclosure. Gradient coils can be added to the active assembly, for example in further layers.

A suitable material to house the superconducting wire had to be selected, whilst ensuring that the quality of the induced magnetic fields and the structural integrity of the system during the cool down process was not compromised. To maintain magnetic field quality, nylon was selected as a non-magnetic and non-conductive material. During the cool down phase inside the cryogenic chamber, the materials undergo extreme thermal changes resulting in a degree of contraction. The nylon coil mount and the aluminium shield that it is fixed to would naturally have different rates of thermal contraction; to prevent this from threatening the structural integrity of the shield and coil mount we use PA12 nylon containing a 40% glass fill. This material has (overall) a similar contraction rate to aluminium, and the risk to its structural integrity is reduced.

Furthermore, a tensioned method of coil winding was utilised for the coils inside the coil mount, as will be described further.

The active shielding method described above was tested at a cryogenic laboratory in February 2023. It was found that when the active shielding method was in use, the magnetic noise floor inside the shielded enclosure reduced by a factor of 2. This result greatly improves the response of the superconducting circuit (equipment under test) to the magnetic field environment, and improves the overall quality of the intended use of the device.

The application for the device was for shielding a superconducting circuit intended for use in a quantum computer. However, there are many other applications where the device would improve the quality of intended use, such as particle physics research, atomic clocks, superconducting magnetometers, superconducting circuits in general and many others.

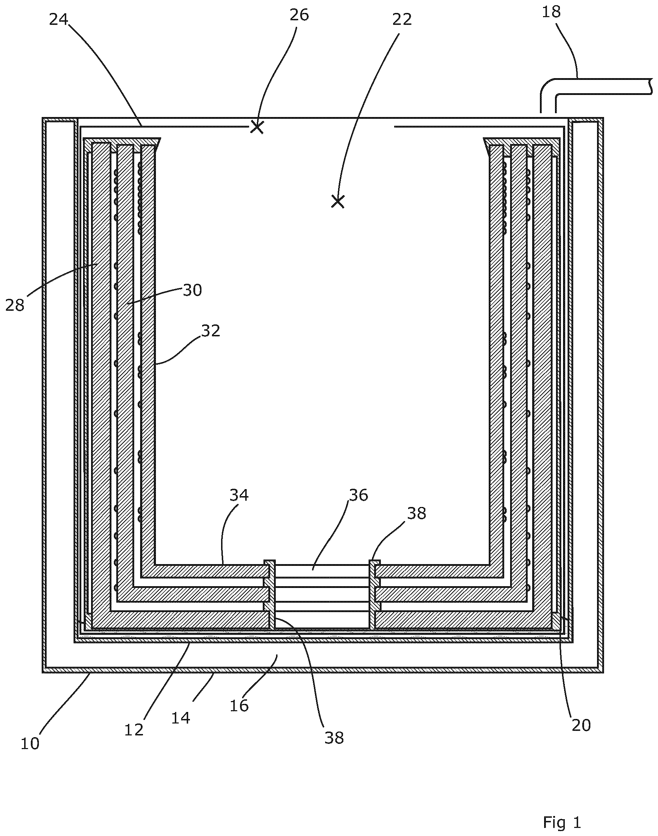

Figures 1 to 6 illustrate an example of a cryostat and coil winding according to the present invention. Referring to figure 1, a cryostat is shown schematically, in this instance in the form of a double-walled vessel 10 having an inner wall 12, an outer wall 14, and an evacuated space 16 between them providing a high degree of thermal insulation. A cooling means is supplied, in this case a source 18 of liquid helium 20 to sit within the vessel 10. The particular form of the cryostat is not especially important, and various forms are known with a range of different cooling means. Any suitable cryostat and cooling means can be provided. This then defines an internal volume 22 which is held at a cryogenic temperature.

To provide magnetic shielding to the internal volume 22, a passive shield 24 is provide within the internal volume. This is a shell of a suitable high-permeability material such as Cryophy^{®} (although other materials are known). In our preferred form, it also features an inner layer of aluminium to provide superconducting eddy current shielding for AC field sources such as magnetic fields induced by 50Hz mains electricity. The passive shield is located within the cryostat, able to re-direct magnetic field lines through the shielding material and leave the enclosed space within the shield relatively free of magnetic flux. An opening 26 is provided, though which equipment to be operated or tested at the cryogenic temperature can be inserted, which will mean that the magnetic field within it will not be perfectly zero as some flux will enter via the opening. However, the opening is necessary for access to the cryostat during use.

Within the passive shield 24, there are three concentric (or nested) cylindrical coil formers 28, 30, 32, each carrying a coil winding for providing active magnetic shielding to the interior volume 22. The outermost former 28 carries a coil oriented in an x direction. The middle former 30 sits within the outermost former 28 and carries a coil oriented in the y direction. An inner former 32 sits within the middle former 30 and carries a coil oriented in the z direction. Each former carries the respective coil on its outer cylindrical face, held in place taut (or under light tension) by being wound around ribs formed on the outer cylindrical surface of the former, as will be described later. The formers each have a lower end face 34 on which they rest and which has a through-aperture 36 allowing wires (etc) to be passed connecting the coil windings to an external source of current (not shown). The current within each coil winding can then be controlled (in a generally known manner) to establish a desired background magnetic field within the internal space 22, or to cancel out a field thereby to reduce the background field to a low or substantially zero field.

The formers 28, 30, 32 are supported within the cryostat 10 by an aluminium mount 38 which extends around the formers 28, 30, 32 and engages with them at their lower end in the apertures 36 and at their upper edges. The coil formers 28, 30, 32 are formed of 3D-printed PA12 nylon containing a 40% glass fill, as noted above. This composite material provides a net coefficient of thermal expansion which substantially matches that of the aluminium mount 38, thus allowing both to be cooled together to the cryogenic temperature and retain their structural integrity. We expect that a glass fill content within 10% of the above amount will be adequate, i.e. between 30% and 50% by volume.

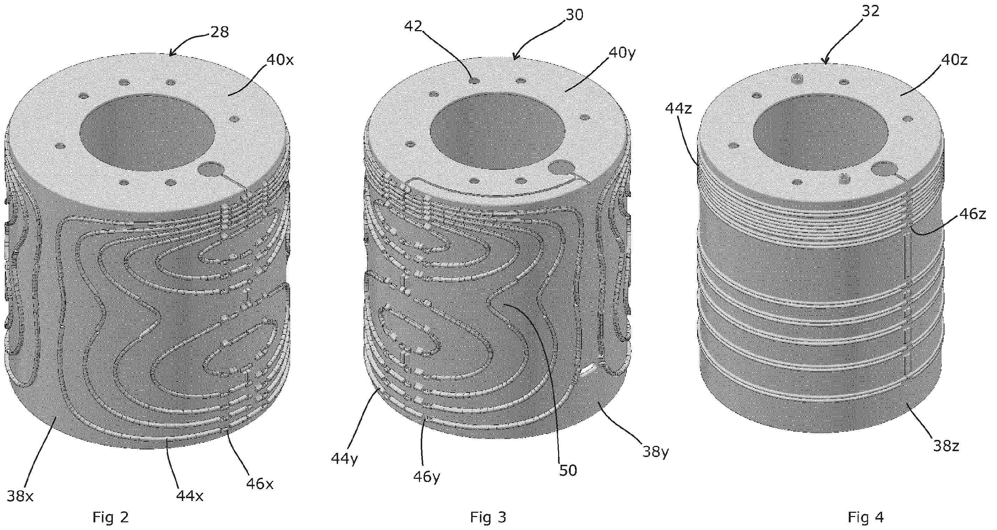

Figures 2 to 4 illustrate the three coil formers and coil windings, figure 2 illustrating the x coil former 28, figure 3 illustrating the y coil former 30, and figure 4 illustrating the z coil former 32. Each of the coil formers, shown inverted relative to figure 1, has a generally cup-shaped morphology comprising a hollow cylindrical body 38x, 38y, 38z partially closed at one end by a circular cap 40x, 40y, 40z. The caps 40 include the apertures 36, and other mounting (etc) holes such as hole 42 to allow passage of wires connecting to the coils, connections to the aluminium mount 38, etc.

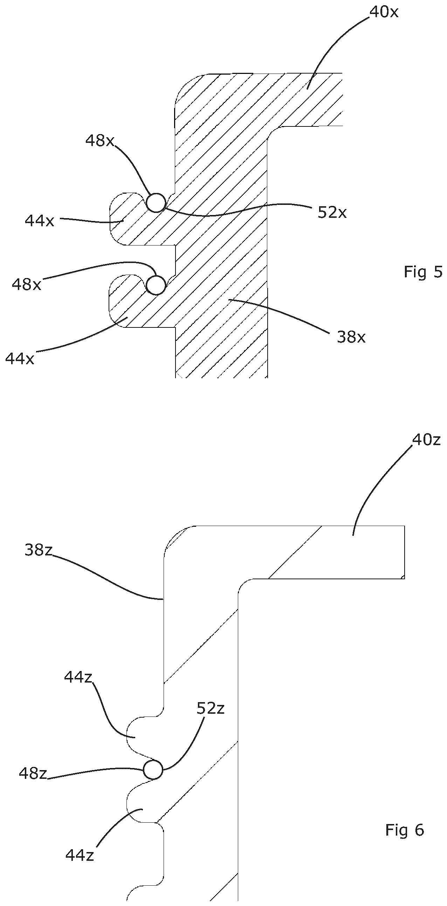

Referring first to the z coil former 32 shown in figure 4, this has a series of ridges 44z on the exterior of its cylindrical body 38z, which define between them a recess 52z sized to accept a superconducting Nb-Ti wire 48z. This is shown in greater detail in figure 6. The ridges 44z, and thus the wires 48z, extend around the cylindrical body 38z in circular forms centred on and transverse to the axis of the cylindrical body 38z. Thus, the wires can be retained snugly in place, taut or under a light tension, and will generate a magnetic field oriented in the z direction, parallel to the axis of the cylindrical body 38z, with a direction determined by the overall direction of current in the coils.

The ridges 44z include gaps such as 46z to allow routing of wires over the surface of the cylindrical body 38z, past each ridge. As an alternative, instead of a pair of ridges either side of a wire, a single trench or similar recess could be provided.

Figures 2 and 3 show the x and y coil formers 28, 30, respectively. These are required to generate a magnetic field that is transverse to the axis of the cylindrical bodies 38x, 38y and so carry a wire coil that is generally in the shape of loops oriented parallel to the axis, but projected onto the cylindrical side wall. These therefore adopt arcuate paths over the outer cylindrical surface, some elliptical-like, others more complex. To retain the wires in position along these paths, ridges 44x, 44y are provided on the cylindrical outer surface of the bodies 38x, 38y, shown in greater detail in figure 5. These are located on the inner (concave) side of the path of each wire; in respect of the simple elliptical paths this is therefore on the inner side of the elliptical path but for the more complex paths it might be on one side of the wire or another depending on the local direction of curvature, such as path 50 (fig 3). As a result, wires 48x, 48y can be placed on the cylindrical outer surfaces and drawn taut or lightly tensioned, which will allow them to be held in place against the ridges 44x, 44y.

To help keep the wires 48x, 48y in place and prevent them from falling off the ridges 44x, 44y, the ridges 44x, 44y are provided with recesses 52x (shown in figure 5) defining elongate channels along their outer (convex) side faces into which the wires 48x, 48y can be drawn taut. Again, gaps are provided in the ridges 44x, 44y such as at 46x, 46y to allow routing of wires over the surface of the cylindrical bodies 38x, 38y, past each ridge.

The specific coil formations can be designed using conventional design principles as applied in other active shielding contexts. Current is excited through the active shielding coils using known electronics assembly and software, (again) as applied in other active shielding contexts. The current through the coils could be driven by various means, and therefore it, the related software, and the specific shapes of the coils are not especially germane to the invention.

One or more further coil formers can be provided if desired, in order to further tune the magnetic field and/or establish a gradient field or similar. Such further coils and formers can be designed using any of the above principles, depending on the desired field orientation.

The device is not necessarily limited to Niobium-Titanium wire material. Any material that is superconducting at atmospheric pressure could be used as the wire, as long as it is capable of being worked into a wire shape.

It will of course be understood that many variations may be made to the above-described embodiment without departing from the scope of the present invention.

## Claims

1. A cryostat containing a cryogenically-cooled internal volume for containing an object to be tested at or apparatus to be operated at a cryogenic temperature, cooling means for reducing the temperature of the internal volume to the cryogenic temperature, at least one coil winding within the cryogenically-cooled internal volume for generating a magnetic field in the internal volume to cancel the effect of an ambient magnetic field, and passive magnetic shielding located within the cryogenically-cooled internal volume, outside the at least one coil winding.

2. A cryostat according to claim 2, in which the least one coil winding provides active magnetic shielding to cancel the effect, within the cryogenically-cooled internal volume, of an ambient magnetic field of below 100 × 10⁻⁶ T, and preferably between about 22 × 10⁻⁶ T and 67 × 10⁻⁶ T.

3. A cryostat according to claim 1 or claim 2, in which the wire of at least one of the at least one coil windings is supported on the nylon former in a pattern having arcuate sections, the wire being retained in place by upstanding arcuate ridges located adjacent the arcuate sections, on the inner side of the arc.

4. A cryostat according to claim 3 in which the upstanding arcuate ridges have an elongate channel for receiving the wire, on the convex side thereof.

5. A cryostat according to any one of claims 1 to 4 in which there are at least three coil windings, oriented in mutually orthogonal directions.

6. A cryostat according to claim 5 in which each of the at least three coil windings, is mounted on one of three nylon formers, the three formers each including a cylindrical portion and being sized so that a second former of the three fits concentrically within the first of the three, and a third former of the three fits concentrically within the second.
